# EUROPÄISCHE PATENTANMELDUNG

(11) **EP 1 128 177 A1**
(43) Veröffentlichungstag der Anmeldung: **29.08.2001**
(21) Anmeldenummer: 00116404.5
(22) Anmeldetag: 28.07.2000
(51) Int. Cl.: G01M 17/10, B61L 23/04

(54) **Dämpferfunktionsüberwachungseinrichtung für Nutzfahrzeuge, insbesondere Schienenfahrzeuge**

(30) Priorität: 25.02.2000 DE 10008805
(71) Anmelder: Liebherr-Aerospace Lindenberg GmbH, 88161 Lindenberg/Allgäu (DE)
(72) Erfinder: Gaile, Anton, 88299-Leutkirch (DE)
(74) Vertreter: Laufhütte, Dieter, Dr.-Ing.

(57) **Zusammenfassung**

Bei einer Überwachungseinrichtung (8) für Dämpfer, insbesondere hydraulische Dämpfer von Schienenfahrzeugen und Nutzfahrzeugen aller Art, wird der Dämpfer als passiver Dämpfer mit einfacher Dämpferkennlinie oder als semiaktiver Dämpfer mit variabler Dämpferkennlinie ausgeführt. Mit einem Überwachungssensor wird die Dämpferkraft ermittelt, und in einer elektronischen Überwachungseinheit wird geprüft, ob die ermittelte Dämpferbelastung mit der üblicherweise zu erwartenden Dämpferbelastung oder mit an anderen Dämpfern ermittelten Dämpferkräften in etwa übereinstimmt. Liegt die ermittelte Belastung außerhalb eines vorgegebenen Toleranzfensters, so wird ein Fehlersignal erzeugt.

## Beschreibung

Die vorliegende Erfindung betrifft eine Dämpferfunktionsüberwachungseinrichtung für Nutzfahrzeuge, insbesondere zur Überwachung sogenannter Schlingerdämpfer von Schienenfahrzeugen.

Technische Systeme müssen von Zeit zu Zeit gewartet werden, insbesondere wenn von ihrer Funktionstüchtigkeit Menschenleben abhängen können. Diese allgemeine Feststellung gilt in besonderem Maß für den Bereich der Nutzfahrzeuge, worunter beispielsweise auch Schienenfahrzeuge zu zählen sind. Die Wartung komplexer Systeme ist aber nur sehr bedingt automatisch durchführbar und daher mit hohen Personalkosten verbunden, was dazu führt, daß in diesem Bereich auf Kosten der Sicherheit gespart wird. Dies hat in jüngerer Vergangenzeit zu äußerst bedauerlichen Unfällen mit Todesfolge geführt, weswegen die Notwendigkeit der Wartung insbesondere von Schienenfahrzeugen zunehmend ins Blickfeld gerückt ist. Von besonderem Interesse sind in diesem Zusammenhang Früherkennungssysteme, mit denen vorzugsweise nicht nur das drohende Versagen unmittelbar überwachter Bauteile (beispielsweise des Radreifens eines Wagons) rechtzeitig und automatisch erkannt wird, sondern mit dem gleichzeitig mittelbar eine Aussage über den Zustand anderer funktioneller Bauteile oder Baugruppen möglich ist.

Aufgabe der vorliegenden Erfindung ist es, ein solches automatisches Früherkennungssystem insbesondere zur Verwendung für Schienenfahrzeuge zur Verfügung zu stellen.

Diese Aufgabe wird erfindungsgemäß durch die Merkmale des Anspruchs 1 gelöst. In den davon abhängigen Ansprüchen sind vorteilhafte Ausgestaltungen der Erfindung angegeben.

Der Erfindung liegt die Erkenntnis zugrunde, daß das Fahrwerk eines jeden Nutzfahrzeugs mindestens einen Dämpfer aufweist. Indem die Funktion dieses Dämpfers automatisch überwacht wird, kann eine Aussage nicht nur über die Funktionstüchtigkeit des Dämpfers selbst sondern auch über die Funktionstüchtigkeit des Fahrwerks insgesamt oder einzelner Bestandteile des Fahrwerks ausgesagt werden. Denn je nach deren Zustand weichen die tatsächlich an dem Dämpfer auftretenden Belastungen in charakteristischer Weise von den üblicherweise zu erwartenden Belastungen ab. Durch eine Analyse der Art und Weise dieser charakteristischen Abweichungen lassen sich Aussagen über den Zustand der vorgenannten Bauteile und Baugruppen treffen. Als Begleiterscheinung läßt sich sogar der Zustand des Fahrwegs bzw. Schienenstrangs ermitteln. Im Zusammenhang mit Schienenfahrzeugen kann die Überwachung vorteilhaft an einem hydraulischen Schlingerdämpfer erfolgen, der die Funktion hat, die Ausdrehbewegung eines Wagenkastens relativ zu seinem Drehgestell oder die Relativbewegung zwischen den einzelnen Wagenkästen zu dämpfen.

Die Erfindung sieht daher zur Überwachung der Funktion eines Dämpfers von Nutzfahrzeugen, insbesondere Schienenfahrzeugen, eine Einrichtung vor, die zunächst einmal eine Meßeinrichtung zur Ermittlung von an dem Dämpfer auftretenden Belastungen (Kräfte, Drücke) aufweist. Im Falle eines hydraulischen Dämpfers handelt es sich um einen Drucksensor oder im einfachsten Fall um einen Druckschalter, mit dem der aktuelle Druck oder zumindest die Druckmaxima und/oder -minima in einer Hydraulikkammer des Dämpfers gemessen werden. Anstelle der Druckmeßeinrichtung kann auch eine Kraftmeßeinrichtung, beispielsweise ein Dehnungsmeßstreifen, eingesetzt werden.

Desweiteren weist die Dämpferfunktionsüberwachungseinrichtung einen Datenspeicher auf, in dem die üblicherweise zu erwartenden Belastungen bzw. Drücke des Dämpfers als Referenzwerte abgelegt sind, um diese Referenzwerte mit den tatsächlich ermittelten Dämpferbelastungen in einer Vergleichseinrichtung prüfen zu können. Wird festgestellt, daß die Abweichung zwischen der ermittelten Dämpferbelastung und der erwarteten Dämpferbelastung außerhalb eines vorgegebenen Toleranzfensters oder jenseits einer vorgegebenen Toleranzschwelle liegt, so wird ein Fehlersignal erzeugt. Dieses Signal kann je nach Größe der festgestellten Abweichung unterschiedliche Informationen enthalten, beispielsweise die Notwendigkeit der Wartung oder einen unzulässig hohen Verschleiß oder ein Versagen eines oder mehrerer Bauteile anzeigen. Desweiteren können Rückschlüsse auf das Funktionsverhalten des Fahrwerks, der Räder oder Ähnliches gezogen werden.

Allerdings sind die "zu erwartenden Belastungen des Dämpfers", die in dem Datenspeicher als Referenzwerte abgelegt sind, dynamische Werte. Das heißt, je nach den von außen auf das mit dem Dämpfer zu dämpfende System einwirkenden Kräften sind unterschiedliche Belastungen des Dämpfers zu erwarten. Diese Systemeinflußgrößen werden daher sowohl beim Ablegen der Referenzwerte als auch beim Vergleichen der Referenzwerte mit den an dem Dämpfer tatsächlich ermittelten Belastungen berücksichtigt. Eine typische Systemeinflußgröße ist beispielsweise die Fahrgeschwindigkeit des Fahrzeugs, mit dem der Dämpfer gekoppelt ist oder die Bewegungsgeschwindigkeit des Dämpfers. Solche Größen können durch Wegzensoren oder Beschleunigungsaufnehmer ermittelt werden.

Aufgrund unterschiedlichem Verschleißzustand und unterschiedlicher Beschaffenheit des Fahrweges kann es vorteilhaft sein, weitere äußere Systemeinflußgrößen in die Dämpfercharakteristik miteinzubeziehen und bei der Auswertung zu berücksichtigen. Solche weiteren äußeren Systemeinflußgrößen sind beispielsweise Quer-, Längs- oder Lateral-Beschleunigungen. Ist dem Dämpfer eine Mindestdämpferkraft vorgegeben, so kann diese zusätzlich als Einflußgröße berücksichtigt werden. Durch die Erhöhung der Anzahl solcher Systemeinflußgrößen können auch die Toleranzschwellen zur Fehlererkennung gesenkt werden.

Eine alternative und besonders einfache und effektive Art der Auswertung ist bei paarig angeordneten Dämpfern (z. B. 2 oder 4 Dämpfer pro Drehgestell, 2 Dämpfer pro Wagenkastengelenk) möglich. In diesem Fall kann davon ausgegangen werden, daß alle parallel angeordneten Dämpfer dieselben Bewegungen erfahren und folglich auch dieselben Kräfte erzeugen müssen. Mittels eines einfachen Vergleichs kann nun festgestellt werden, daß einer der beiden Dämpfer defekt ist. Selbstverständlich kann dieses Vergleichsverfahren auf eine beliebige Anzahl von Dämpfern erweitert werden. In diesem Fall wird vorteilhafter Weise jeder Dämpfer gegen den Mittelwert aller Dämpfer verglichen.

Indem der Druck eines hydraulischen Dämpfers überwacht wird, ist es möglich, anhand der Abweichung des tatsächlich ermittelten Druckverlaufs von dem üblicherweise zu erwartenden Druckverlauf die folgenden Funktionen des Dämpfers unmittelbar oder mittelbar zu überwachen:
- die Funktion der hydraulischen Ventile im Dämpfer,
- die Funktion der hydraulischen Dichtungen,
- den Zustand der mechanischen Verbindungen zwischen dem Dämpfer und den mit dem Dämpfer gekoppelten Fahrwerk einerseits und Wagenkasten andererseits,
- im Falle eines semiaktiv ausgebildeten Dämpfers, die Funktion eines Magnetventils oder Proportionalventils.

Die vorgenannten Informationen können als Primärinformationen der Dämpferfunktionsüberwachung bezeichnet werden. Zusätzlich sind über die Art und Höhe der auftretenden Druckpulse auch Sekundärinformationen beispielsweise über den Zustand des Fahrweges oder über den Zustand des Fahrwerks ableitbar, wodurch eine Erkennung von Fehlern, wie beispielsweise der Bruch eines Radreifens, frühzeitig möglich ist. Die gemessenen Belastungen des Dämpfers können in einem weiteren Datenspeicher gespeichert werden, um später bei den üblichen Wartungsarbeiten sorgfältig analysiert werden zu können.

In einer besonderen Ausführungsform der Erfindung ist eine vereinfachte Überwachung für solche Dämpfer vorgesehen, die zwei schaltbare Dämpferkennlinien besitzen (semiaktive Dämpfer).

Nachfolgend wird die Erfindung beispielhaft unter Bezugnahme auf die anhängenden Figuren beschrieben. Darin zeigen:
Figur 1 einen idealisierten Zusammenhang zwischen Fahrgeschwindigkeit und Dämpfungskraft für einen Schlingerdämpfer eines Schienenfahrzeugs,
Figur 2 die Dämpfercharakteristik eines zweistufig schaltbaren Dämpfers in Abhängigkeit von der Bewegungsgeschwindigkeit des Dämpferkolbens,
Figur 3 ein Hydraulikschema für einen zweistufig schaltbaren hydraulischen Dämpfer, und
Figur 4 eine hydraulische Schaltung mit Druckhaltefähigkeit zur Messung der Druckmaxima.

Wie zuvor erläutert, handelt es sich bei den als Referenzwerte im Datenspeicher abgelegten "zu erwartenden Belastungen des Dämpfers" um dynamische Werte, die beispielsweise von der Fahrgeschwindigkeit des Fahrzeugs und weiteren Systemeinflußgrößen wie beispielsweise Quer-, Längs- oder Lateral-Beschleunigungen abhängen.

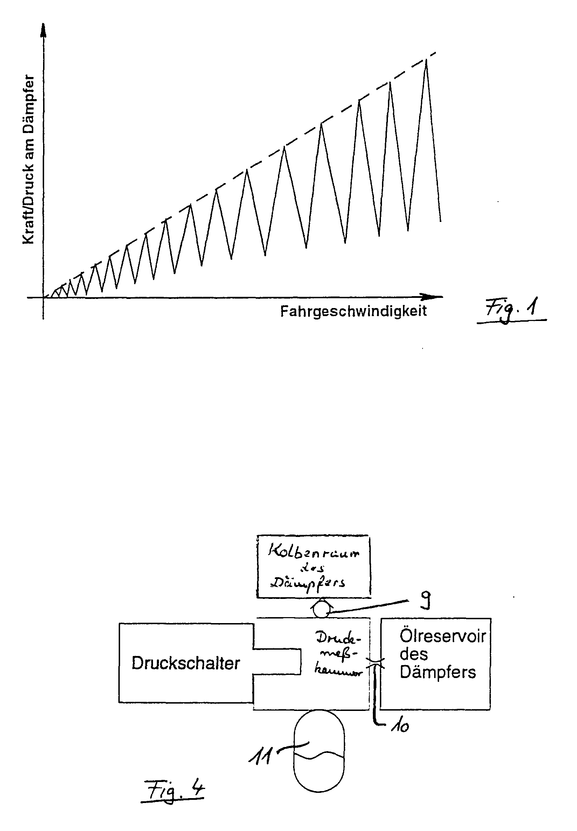

Ein idealisierter Zusammenhang zwischen Fahrgeschwindigkeit und Dämpfungskraft bzw. gemessenem Hydraulikdruck ist für einen Schlingerdämpfer eines Schienenfahrzeugs in Figur 1 dargestellt. Die durchgehende Linie stellt dabei den Druck im Dämpfer dar, die gestrichelte Linie die jeweiligen Druckmaxima. Zur Auswertung werden lediglich die Druckmaxirna und gegebenenfalls die Druckminima herangezogen. Der dazwischenliegende Bereich und zusätzlich ein darüber und darunter liegender Bereich bilden das Toleranzfenster, in welchem der Dämpfer als funktionsfähig gilt. Die Grenzen des Toleranzfensters bilden die Toleranzschwellen, die etwas oberhalb und unterhalb der Druckmaxima- und Druckminimalinie liegen. Werden darüber oder darunter liegende Druckwerte ermittelt, so wird ein Fehlersignal erzeugt. Diese "Dämpfercharakteristik", das heißt die Abhängigkeit der zu erwartenden Belastung des Dämpfers von einer variablen, äußeren Systemeinflußgröße, wie beispielsweise der Fahrgeschwindigkeit oder Bewegungsgeschwindigkeit des Dämpferkolbens, wird als Referenzwert in dem Datenspeicher abgelegt.

Die Toleranzschwellen zur Fehlererkennung können weiter gesenkt werden, indem die Anzahl der berücksichtigten Systemeinflußgrößen erhöht wird. Beim vereinfachten Auswerten der Dämpferkräfte mittels Vergleichs mehrerer Dämpfer müssen idealerweise nur die Bauteiltoleranzen der Dämpfer berücksichtigt werden, wodurch sich ein relativ enges Toleranzband ergibt.

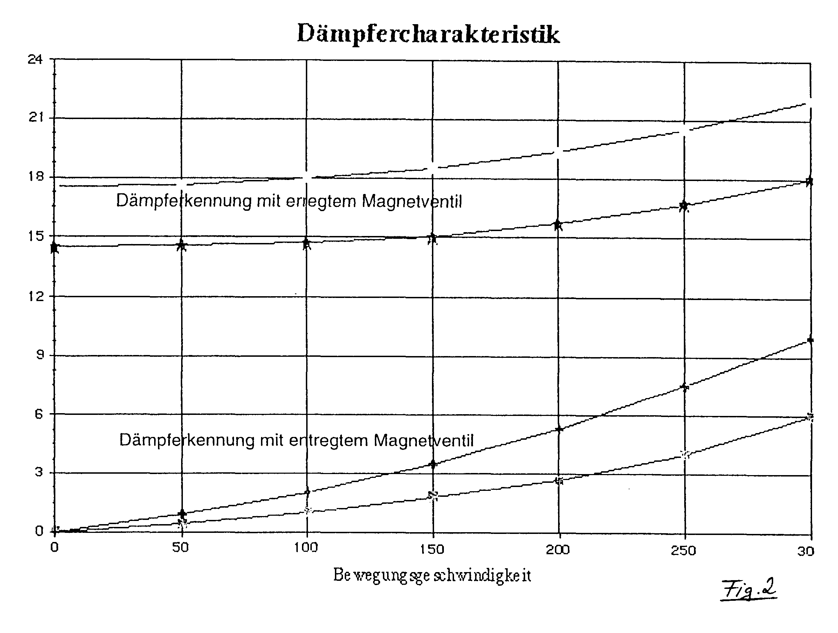

In Figur 2 ist die Dämpfercharakteristik, wie sie beispielsweise als Referenzwert in dem Datenspeicher abgelegt sein kann, für einen zweistufig schaltbaren (semiaktiven) Dämpfer graphisch dargestellt. Insgesamt sind also zwei Dämpfercharakteristiken entsprechend der Zahl der Schaltstufen als Referenzwerte gespeichert. Es ist gezeigt die Abhängigkeit des maximal und minimal zu erwartenden Drucks in Abhängigkeit von der Bewegungsgeschwindigkeit eines Dämpfers, dessen Dämpferkennlinie mittels einem erregbaren Magnetventil zwischen zwei Stufen schaltbar ist. Die Fläche zwischen den beiden oberen Kurven "Dämpferkennung mit erregtem Magnetventil" definieren das Toleranzfenster für eine harte Dämpferkennlinie, und die Fläche zwischen den beiden unteren Kurven "Dämpferkennung mit entregtem Magnetventil" definiert das Toleranzfenster für die normale, weiche Dämpferkennlinie.

Für solche zweistufig schaltbaren Dämpfer sieht eine besondere Ausführungsform der Erfindung eine vereinfachte Überwachung vor. Die vereinfachte Überwachung geht von der Überlegung aus, daß folgende zwei Bedingungen grundsätzlich gelten:
- bei bewegtem Fahrzeug und erregtem Magnetventil entsteht innerhalb einer definierten Zeit immer eine Druckspitze, die mindestens dem unteren Toleranzwert der harten Dämpfercharakteristik entspricht; und
- bei bewegtem Fahrzeug und entregtem Magnetventil entsteht keine Druckspitze, die höher ist als der obere Toleranzwert der weichen Dämpfercharakteristik.

Stellt sich nun ein Zustand ein, bei dem die tatsächlich ermittelte Druckspitze im Dämpfer über eine definierte Zeit zwischen den beiden Toleranzfenstern liegt, so ist dies ein Indiz für einen Funktionsfehler. Für die vereinfachte Überwachung ist daher vorgesehen, daß die Meßeinrichtung einen Sensor besitzt, dessen Ansprechwert minimal unterhalb dem unteren Toleranzwert der harten (oberen) Dämpfercharakteristik und oberhalb dem oberen Toleranzwert der weichen (unteren) Dämpfercharakteristik liegt. Wird ein Funktionsfehler festgestellt, so wird der Dämpfer automatisch in einen sicheren Zustand geschaltet.

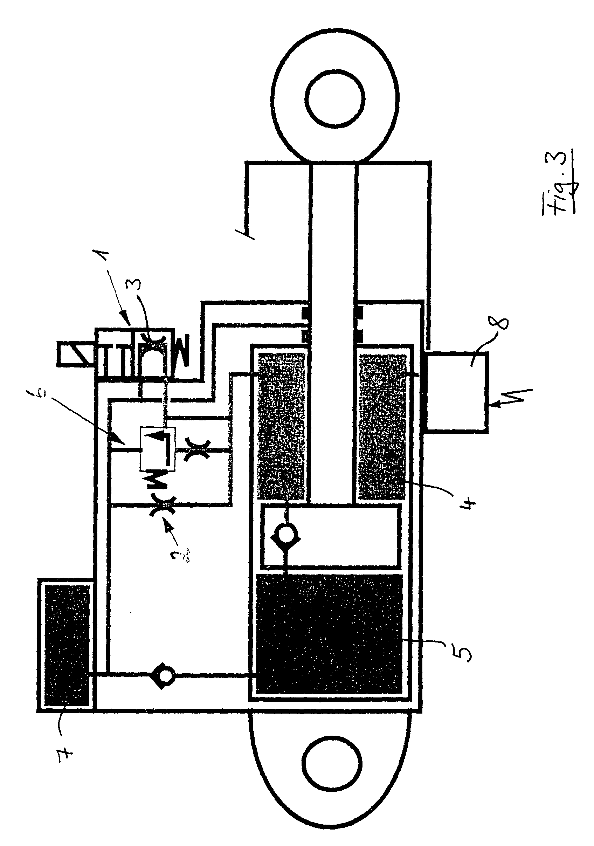

In Figur 3 ist ein Hydraulikschema für einen hydraulischen Dämpfer dargestellt, wie er als Schlingerdämpfer zwischen dem Fahrwerk und Wagenkasten eines Schienenfahrzeugs eingesetzt wird. Prinzipiell können aber alle Dämpferbauarten mit der erfindungsgemäßen Überwachungseinrichtung ausgerüstet werden.

Der in Figur 3 dargestellte, nach dem Durchströmprinzip arbeitende hydraulische Dämpfer hat den Vorteil, daß nur eine Druckmeßeinrichtung notwendig ist, um die Zug- und Druckstufe des Dämpfers zur Ermittlung der Druckspitzen zu überwachen. Dies ist deshalb möglich, weil sowohl Zug- als auch Drucklasten kraftäquivalente Druckspitzen in der Einfahrkammer des Dämpfers erzeugen.

Der hydraulische Dämpfer nach Figur 3 ist als semiaktiver Dämpfer ausgebildet. Mittels dem Magnetventil oder Proportionalventil 1 kann die Kennlinie des Dämpfers zwischen "hart" und "weich" eingestellt werden. Dargestellt ist der Dämpfer mit entregtem Magnetventil 1 und "weicher" Kennlinie. Denn die Einfahrkammer 4 ist in dem dargestellten Falle des entregten Magnetventils 1 sowohl über die Drossel 2 als auch über die Drossel 3 des Magnetventils 1 mit der Ausfahrkammer 5 des Hydraulikzylinders verbunden. Die Drossel 3 wird erst durch Erregung des Magnetventils blockiert, so daß dann die Verbindung zwischen den beiden Kammern des Hydraulikzylinders lediglich noch über die Drossel 2 besteht und der Dämpfer eine "harte" Kennlinie besitzt. Um bei größeren Geschwindigkeiten die Dämpferkraft zu limitieren, ist desweiteren noch ein Überdruckventil 6 vorgesehen. Der Dämpfer weist desweiteren noch einen Druckspeicher 7 auf.

Wesentlich für die Erfindung ist die an die Einfahrkammer 4 angeschlossene Druckmeßeinrichtung 8. Wie anhand von Figur 1 erwähnt wurde, sind für die Überwachung der Funktionsfähigkeit des Dämpfers insbesondere bei der vereinfachten Überwachung die gemessenen Druckmaxima und/oder Druckminima von Bedeutung. Die Druckextremwerte liegen aber normalerweise nur kurzzeitig über der Toleranzschwelle bzw. außerhalb des Toleranzfensters, so daß die Schaltstellung des Druckaufnehmers, der im einfachsten Fall ein Druckschalter sein kann, ständig seine Schaltstellung wechselt. Um dies zu verhindern, umfaßt die Druckmeßeinrichtung eine Druckhalteeinrichtung, wie sie prinzipiell in Figur 4 dargestellt ist.

Figur 4 zeigt eine Druckmeßkammer, die mit dem Kolbenraum des Dämpfers in Fluidverbindung steht, wobei diese Fluidverbindung ein in Richtung zum Kolbenraum sperrendes Rückschlagventil 9 aufweist. Liegt der Druck im Kolbenraum über dem Druckniveau in der Druckrneßkammer, so öffnet das Rückschlagventil 9 und der Druck in der Druckmeßkammer erhöht sich auf den Druck des Kolbenraums. Dieser Druck wird vom Druckschalter wahrgenommen, und der Druckschalter schaltet, sobald der Druck in der Druckmeßkammer die Schaltschwelle des Druckschalters überschreitet. Mittels eines angekoppelten Druckspeichers 11 kann das Volumen der Druckmeßkammer zusätzlich vergrößert werden, wodurch sich die Steifigkeit des eingeschlossenen Volumens reduziert, was wiederum dazu führt, daß mehr Öl durch die Drossel 10 zurück ins Ölreservoir fließen muß, bevor der Druck in der Druckmeßkammer wieder unter die Schaltschwelle des Druckschalters fällt. Hieraus folgt, je größer der Druckspeicher, desto länger ist die Zeit, bis der Druckschalter nach einem Druckpuls wieder zurückschaltet. Auf diese Weise werden hohe Schaltzyklen des Druckschalters vermieden. Optimaler Weise sollte die Kombination Druckspeicher-Drossel so gewählt werden, daß die Druckabfallzeit kleiner ist als der maximale Zeitabstand zwischen zwei Druckpulsen. In diesem Fall ist die Schaltstellung des Druckschalters immer eindeutig dem Betriebszustand (hart-weich) des Dämpfers zugeordnet, wodurch die Auswertung der Drucksignale wesentlich vereinfacht wird.

Im Zusammenhang mit dem zweistufig schaltbaren Dämpfer gemäß Figur 3 und der "vereinfachten Überwachung", wie sie in Bezug auf Figur 2 beschrieben wurde, führt die Druckhalteeinrichtung dazu, daß die Schalthäufigkeit des Druckschalters auf die Schalthäufigkeit des Magnetventils reduziert wird.

## Patentansprüche

1. Dämpferfunktionsüberwachungseinrichtung für Nutzfahrzeuge, insbesondere Schienenfahrzeuge, umfassend:
- eine Meßeinrichtung zur Ermittlung von an einem Dämpfer auftretenden Belastungen,
- eine Vergleichseinrichtung zum Vergleichen ermittelter Dämpferbelastungen mit Referenzwerten von zu erwartenden Dämpferbelastungen
- Erzeugen eines Fehlersignals, falls mittels der Vergleichseinrichtung eine Abweichung zwischen der ermittelten Dämpferbelastung und der zu erwartenden Dämpferbelastung festgestellt wird, die außerhalb eines vorgegebenen Toleranzfensters bzw. jenseits einer vorgegebenen Toleranzschwelle liegt.

2. Dämpferfunktionsüberwachungseinrichtung nach Anspruch 1, **dadurch gekennzeichnet**, daß als Referenzwerte üblicherweise zu erwartende Dämpferbelastungen in Abhängigkeit von ein oder mehreren variablen, von außen auf das mit dem zu überwachenden Dämpfer zu dämpfende System wirkenden Systemeinflußgrößen ("Dämpfercharakteristik") in einem Datenspeicher abgelegt sind und die Vergleichseinrichtung den Vergleich der ermittelten Dämpferbelastungen mit den abgelegten Referenzwerten unter Berücksichtigung der aktuell wirkenden ein oder mehreren Systemeinflußgrößen durchführt.

3. Dämpferfunktionsüberwachungseinrichtung nach Anspruch 1 oder 2, **dadurch gekennzeichnet**, daß als Referenzwerte für die zu erwartenden Dämpferbelastungen aktuelle Dämpferbelastungen herangezogen werden, die an einem oder mehreren anderen Dämpfern desselben Nutzfahrzeugs gemessen werden.

4. Dämpferfunktionsüberwachungseinrichtung nach Anspruch 3, **dadurch gekennzeichnet**, daß die Vergleichseinrichtung Druckmaxima von paarig angeordneten Dämpfern miteinander vergleicht.

5. Dämpferfunktionsüberwachungseinrichtung nach einem der Ansprüche 1 bis 4, **dadurch gekennzeichnet**, daß die Meßeinrichtung (8) eine Druckmeßeinrichtung ist.

6. Dämpferfunktionsüberwachungseinrichtung nach einem der Ansprüche 1 bis 4, dadurch gekennzeichnet, daß die Meßeinrichtung eine Kraftmeßeinrichtung ist.

7. Dämpferfünktionsüberwachungseinrichtung nach einem der Ansprüche 1 bis 5, **dadurch gekennzeichnet**, daß die Belastungen des Dämpfers anhand eines sich im Dämpfer einstellenden Fluiddrucks ermittelt werden.

8. Dämpferfunktionsüberwachungseinrichtung nach einem der Ansprüche 1 bis 7, **dadurch gekennzeichnet**, daß die Meßeinrichtung (8) nur die Belastungsmaxima und/oder -minima berücksichtigt.

9. Dämpferfünktionsüberwachungseinrichtung nach einem der Ansprüche 2 bis 8, **dadurch gekennzeichnet**, daß als variable Systemeinflußgröße die Fahrgeschwindigkeit eines mit dem zu überwachenden Dämpfer gekoppelten Fahrzeugs berücksichtigt wird.

10. Dämpferfunktionsüberwachungseinrichtung nach einem der Ansprüche 2 bis 9, **dadurch gekennzeichnet**, daß die Bewegungsgeschwindigkeit des Dämpfers als variable Systemeinflußgröße berücksichtigt wird.

11. Dämpferfunktionsüberwachungseinrichtung nach einem der Ansprüche 2 bis 10, **dadurch gekennzeichnet**, daß als variable Systemeinflußgröße die Quer-, Längs- und/oder Lateral-Beschleunigung eines mit dem zu überwachenden Dämpfer gekoppelten Fahrzeugs berücksichtigt wird.

12. Dämpferfunktionsüberwachungseinrichtung nach einem der Ansprüche 2 bis 11, **dadurch gekennzeichnet**, daß als weitere Systemeinflußgröße eine dem zu überwachenden Dämpfer vorgegebene Dämpferkraft berücksichtigt wird.

13. Dämpferfunktionsüberwachungseinrichtung nach einem der Ansprüche 2 bis 12, **gekennzeichnet durch** einen weiteren Datenspeicher, in dem die ermittelten Dämpferbelastungen zur späteren Analyse gespeichert werden.

14. Dämpferfunktionsüberwachungseinrichtung nach einem der Ansprüche 2 bis 13, **dadurch gekennzeichnet**, daß im Falle eines zu überwachenden Dämpfers mit einstellbaren unterschiedlichen Dämpferkennlinien entsprechend viele Dämpfercharakteristiken in dem Datenspeicher abgelegt sind.

15. Dämpferfunktionsüberwachungseinrichtung nach Anspruch 14, **dadurch gekennzeichnet**, daß im Falle eines Fehlersignals der zu überwachende Dämpfer automatisch in einen sicheren Zustand geschaltet wird.

16. Dämpferfunktionsüberwachungseinrichtung nach Anspruch 14 oder 15, **dadurch gekennzeichnet**, daß im Datenspeicher eine erste Dämpfercharakteristik mit einem ersten Toleranzfenster für eine Dämpferkennlinie eines hart eingestellten Dämpfers und eine zweite Dämpfercharakteristik mit einem zweiten Toleranzfenster für eine Dämpferkennlinie eines weich eingestellten Dämpfers abgelegt sind und das Fehlersignal erzeugt wird, wenn die ermittelte Dämpferbelastung zwischen dem ersten Toleranzfenster für die erste Dämpfercharakteristik und dem zweiten Toleranzfenster für die zweite Dämpfercharakteristik liegt.

17. Dämpferfunktionsüberwachungseinrichtung nach Anspruch 1 bis 16, **dadurch gekennzeichnet**, daß mittels der Meßeinrichtung (8) ein Hydraulikdruck in einem Hydraulikvolumen (4) eines hydraulischen Dämpfers ermittelt wird, wobei die Meßeinrichtung (8) von dem Hydraulikvolumen (4) durch ein Rückschlagventil (9) getrennt ist und sowohl an einen Hydraulikspeicher (11) als auch über eine Drossel (10) an ein Reservoir für abfließendes Hydraulikfluid angeschlossen ist, um die Schalthäufigkeit der Meßeinrichtung (8) zu reduzieren.

18. Verwendung einer Dämpferfunktionsüberwachungseinrichtung nach einem der Ansprüche 1 bis 17 zur Überwachung der Funktion von hydraulischen Ventilen des zu überwachenden Dämpfers.

19. Verwendung einer Dämpferfunktionsüberwachungseinrichtung nach einem der Ansprüche 1 bis 17 zur Überwachung der Funktion von hydraulischen Dichtungen des zu überwachenden Dämpfers.

20. Verwendung einer Dämpferfunktionsüberwachungseinrichtung nach einem der Ansprüche 1 bis 17 zur Überwachung der Funktion mechanischer Verbindungen zwischen dem zu überwachenden Dämpfer und den mit dem Dämpfer gekoppelten Systemen.

21. Verwendung einer Dämpferfunktionsüberwachungseinrichtung nach einem der Ansprüche 1 bis 17 zur Überwachung der Funktion eines Magnetventils oder Proportionalventils des zu überwachenden Dämpfers.

22. Verwendung einer Dämpferfunktionsüberwachungseinrichtung nach einem der Ansprüche 1 bis 17 zur Überwachung der Funktion des Fahrwegszustandes.

23. Verwendung einer Dämpferfunktionsüberwachungseinrichtung nach einem der Ansprüche 1 bis 17 zur Überwachung des Fahrwerks eines Schienenfahrzeugs.

24. Dämpfer für Nutzfahrzeuge mit einer Dämpferüberwachungseinrichtung nach einem der Ansprüche 1 bis 17.

25. Dämpfer nach Anspruch 24, **dadurch gekennzeichnet**, daß der Dämpfer ein hydraulischer Dämpfer ist.

26. Dämpfer nach Anspruch 25, **dadurch gekennzeichnet**, daß der hydraulische Dämpfer ein Schlingerdämpfer für ein Schienenfahrzeug ist.
